Europäisches Patentamt

European Patent Office

Office européen des brevets

(11) Publication number: **0 338 801**
A2

# EUROPEAN PATENT APPLICATION

(21) Application number: 89303877.8

(22) Date of filing: 19.04.89

(51) Int. Cl.⁴: **A 01 G 9/12**

(30) Priority: 22.04.88 NZ 224337

(43) Date of publication of application:
25.10.89 Bulletin 89/43

(84) Designated Contracting States:
BE DE ES FR GB IT NL SE

(71) Applicant: **Petersen, Alan Keith**
**165 Levers Road**
**Tauranga (NZ)**

(72) Inventor: **Petersen, Alan Keith**
**165 Levers Road**
**Tauranga (NZ)**

**Naus, Vincent Joseph**
**Lunds Road, R.D. 2**
**Katikati (NZ)**

(74) Representative: **Holliday, Frank**
**Marks & Clerk Friars House 6-10 Parkway**
**Chelmsford, Essex CM2 0NF (GB)**

(54) **Plant tie.**

(57) A device (1) for supporting plant stems which has two
arms (2,3) one adapted to engage with a tying cord and the
other (3) capable of securing a plant stem or being held by the
tying cord where a plant stem or bud is secured between the
arms (2,3).

Attachment means (9) can be provided at the joined end of
the arms (2,3,).

FIG 1

EP 0 338 801 A2

## Description

This invention relates to plant ties in general and in particular ties suitable for orchid stems and the like.

There are a number of difficulties associated with conventional plant ties. One major difficulty is that few plant ties have the adaptability to cope with growing plant parts such as stems and canes that are encircled by the tie. Ties that become to small for the plant can cause damage by cutting into the growing tissue. A further problem associated with conventional plant ties is that there are few that facilitate connections to overhead wires and support systems to apply positive pressure to the stem as it grows and extends upwards.

It is an object of the present invention to provide a plant tie which addresses the above problems and which may have a broader general application.

Further objects and advantages of the present invention will become apparent from the ensuing description which is given by way of example.

According to the present invention there is provided a device for supporting plant stems which comprises two articulately connected arms the first of which is bent back on itself at its free end to define a throat and a mouth therefore, said mouth being wider than said throat; the second of which is bent back on itself at its free end to form a hook and a throat leading to same, the arrangement being that the width of the hook is greater than the width of the throat leading into it; wherein in use, the first arm is used to clinch the free end of a tying cord whilst the second arm, if used, can engage said cord or a supporting cord.

Aspects of the present invention will now be described by way of example only with reference to the accompanying drawings in which:

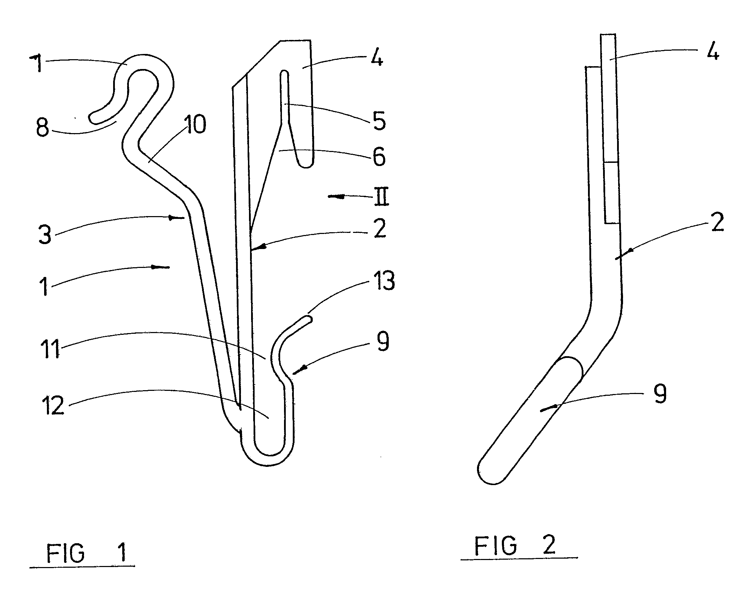

Figure 1: is a side view of a plant tie in accordance with one possible embodiment of the present invention, and

Figure 2: is a further side view in the direction of arrow II of Figure 1, and

Figures 3-6: illustrate the modes for use of the plant tie of Figures 1 and 2.

With respect to the drawings the plant tie device generally indicated by arrow 1 comprises two articulately connected arms indicated by arrows 2 and 3 respectively. The first arm 2 has a portion 4 bent back on itself at its free end to define a narrow throat 5 and a mouth 6 therefor, the mouth 6 being wider than the throat 5. The second arm 3 also has a bent back portion 7 to form a hook and a throat 8 leading to same. The width of the hook formed from the bent back portion 7 is greater than the throat 8 leading to it.

In the example illustrated the two arms 2 and 3 are joined together to form a substantially vee shaped device.

Attachment means generally indicated by arrow 9 can be connected near the end of the two arms 2,3.

The plant tie is conveniently moulded in a plastics material although it may be possible to mould or fabricate the tie in other materials such as wire or steel plate.

The arm 3 is provided with a crank 10 which precedes the bent back portion 7.

The bent back portion of the arm 2 is approximately half depth of the arm and is flat with the mouth 6 being substantially vee shaped.

The attachment means 9 is in the form of a hook having a throat 11 leading to a mouth 12 with the free end of the hook 13 being diverging in relation to the arm 2.

The plant tie can be used to attach to any part of a stem during extension and in particular the last buds of flowers of the stem, a further possible use for the tie is as a simple hook for supporting stems during harvest and storage.

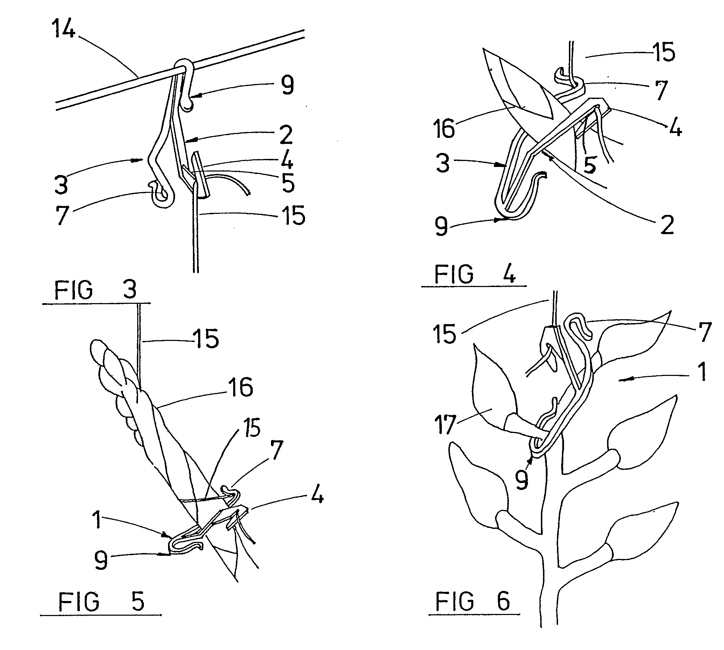

Figures 3,4,5 and 6 of the drawings show some but not all of the possible modes of use for the plant tie.

In Figure 3 the tie is supported by a wire 14 with attachment means 9 engaging the wire and a cord 15 is gripped by the throat 5 of the bent back portion 4 of arm 2. Bent back portion 7 is not in use but obviously could be used to grip a second wire (not shown) or such like.

Figure 4 illustrates a further mode of use of the plant tie. Cord 15 is gripped by the throat 6 of the bent back portion 4 of arm 2 and a plant stem or branch 16 is gripped by the plant tie when cord 15 is engaged with the bent back portion 7 of arm 3. On this occasion the attachment means 9 is not in use.

Figure 5 illustrates a similar technique to that illustrated by Figure 5 where the cord 15 is looped around a longer extending end of the plant stem or branch 16.

In Figure 6 the bent back portioned 7 is used to grip stem 17 and again the bent back portion 4 is used to secure end of cord 15 and on this occasion the turned back portion 7 is not in use.

Because the plant tie is moulded in a resilient material where the tie is used to grip a plant stem or branch there is "give" in the clip to minimise damage to the plant. If the cords used to suspend the tie are elastic, positive upward pressure can readily be applied. The flexibility of the arms of the plant tie allow it to readily engage stems of different or variable diameter.

While several modes of use of the clip have been described by way of example only it would be appreciated that there is ample scope for improvisation.

Aspects of the present invention have been described by way of example only and it would be appreciated that modifications and additions thereto may be made without departing from the scope thereof as defined in the appended claims.

## Claims

1. A device (1) for supporting plant stems characterised by two articulately connected arms (2,3) the first (2) of which is bent back on itself at its free end to define a throat (6) and a mouth (5) therefor, said mouth (5) being wider than said throat (6); the second (3) of which is bent back on itself at its free end to form a hook (7) is greater than the width of the throat (8) leading into it; wherein in use, the first arm (2) is used in clinch the free end of tying cord (15) whilst the second arm (3), if used, can engage said cord (15) or a supporting cord (14).

2. A device (1) as claimed in claim 1 including a attachment means (9) located near the connected end of the two arms (2,3).

3. A device (1) as claimed in claim 2 wherein the attachment (9) means is a hook.

4. A device (1) as claimed in anyone of claims 1 to 3 wherein at least one of the first and second arms (2,3) is arcuate.

5. A device (1) as claimed in anyone of claims 1 to 4 manufactured from a resilient material.

6. A device (1) as claimed in claim 5 wherein the resilient material is plastic.

FIG 1

FIG 2

FIG 4

FIG 6

FIG 3

FIG 5